# EUROPÄISCHE PATENTANMELDUNG

(11) **EP 4 190 507 A1**
(43) Veröffentlichungstag der Anmeldung: **07.06.2023**
(21) Anmeldenummer: 21211583.6
(22) Anmeldetag: 01.12.2021
(51) Int. Cl.: B25F 5/00

(54) **AKKUMULATOR MIT GEFEDERTER ANSCHLUSSVORRICHTUNG**

(71) Anmelder: Hilti Aktiengesellschaft, 9494 Schaan (LI)
(72) Erfinder: Mayr, Florian, 87600 Kaufbeuren (DE); Hartmann, Markus, 87665 Mauerstetten (DE); Hauser, Klaus, 86830 Schwabmünchen (DE); Hainke, Uwe, 01109 Dresden (DE)
(74) Vertreter: Hilti Aktiengesellschaft Corporate Intellectual Property

(57) **Zusammenfassung**

Akkumulator (7), vorzugsweise als wiederlösbare Energieversorgung für eine Werkzeugmaschine (1), enthaltend wenigstens eine Energiespeicherzelle (11) und eine Anschlussvorrichtung (10) zum wiederlösbaren Verbinden des Akkumulators (7) mit einer Werkzeugmaschine (1), wobei die Anschlussvorrichtung (10) wenigstens ein erstes, zweites und drittes Anschlusselement (13a, 13b, 13c) enthält.

Die Anschlussvorrichtung (10) enthält eine Halte- und Aufnahmevorrichtung (13) zum wenigstens teilweisen Aufnehmen des ersten, zweiten und dritten Anschlusselements (13a, 13b, 13c) enthält, wobei das erste und zweite Anschlusselement (13a, 13b) durch wenigstens ein Ausgleichelement (19a, 19b) so mit der Halte- und Aufnahmevorrichtung (13) verbunden ist, dass eine Relativbewegung in wenigstens eine Richtung zwischen dem ersten und zweiten Anschlusselement (13a, 13b) sowie der Halte- und Aufnahmevorrichtung (13) ausgleichbar ist und wobei das erste und zweite Anschlusselement (13a, 13b) so mit dem dritten Anschlusselement (13c) verbunden ist, dass eine Relativbewegung in wenigstens eine Richtung zwischen dem dritten Anschlusselement (13c) sowie der Halte- und Aufnahmevorrichtung (13) ausgleichbar ist.

## Beschreibung

Die vorliegende Erfindung betrifft einen Akkumulator, vorzugsweise als wiederlösbare Energieversorgung für eine Werkzeugmaschine, enthaltend wenigstens eine Energiespeicherzelle und eine Anschlussvorrichtung zum wiederlösbaren Verbinden des Akkumulators mit einer Werkzeugmaschine, wobei die Anschlussvorrichtung wenigstens ein erstes, zweites und drittes Anschlusselement enthält.

Sogenannte kabellose Werkzeugmaschinen, wie beispielsweise Akku-Schrauber, Bohrmaschinen, Sägen, Schleifgeräte, oder dergleichen, können zur Energieversorgung mit einem oder mehreren Akkumulatoren verbunden werden. Der Akkumulator weist dabei eine Vielzahl an Energiespeicherzellen auf, auch Akku-Zellen genannt, mit deren Hilfe elektrische Energie aufgenommen, gespeichert und wieder abgegeben werden kann. Wenn der Akkumulator mit einer Werkzeugmaschine verbunden ist, kann die in den Energiespeicherzellen gespeicherte elektrische Energie an die Verbraucher (z.B. ein bürstenloser Elektromotor) der Werkzeugmaschine zugeführt werden. Zum Aufladen, d.h. Befüllen der Energiespeicherzellen mit elektrischer Energie, wird der Akkumulator mit einer Ladevorrichtung verbunden, sodass elektrische Energie zu den Energiespeicherzellen gelangen kann.

Bei der Verwendung bzw. beim Arbeiten mit einer akku-betriebenen Werkzeugmaschine kann es zu nicht unerheblichen Vibrationen und Erschütterungen an der Werkzeugmaschine sowie an dem mit der Werkzeugmaschine verbundenen Akkumulator kommen. Dies ist insbesondere der Fall, wenn es sich bei der Werkzeugmaschine um ein Abrisswerkzeug, wie z.B. ein Meissel- oder Abbruchhammer, handelt. Durch die Vibrationen und Erschütterungen während der Verwendung der Werkzeugmaschine werden nahezu sämtliche Komponenten und Baugruppen der Werkzeugmaschine sowie des Akkumulators mehr oder weniger stark belastet. Diese Belastungen können schließlich zu Beschädigungen an den jeweiligen Bauteilen oder sogar zu einem Totalausfall der ganzen Werkzeugmaschine führen.

Ein besonderes Problem stellt jedoch die Schnittstelle zwischen Werkzeugmaschine und Akkumulator dar. An der Schnittstelle sind die elektrischen Kontakte des Werkzeugmaschine und die elektrischen Kontakte des Akkumulators so miteinander verbunden, dass die in den Energiespeicherzellen gespeicherte elektrische Energie von dem Akkumulator zu der Werkzeugmaschine gelangen kann. Dadurch, dass der Akkumulator lediglich wiederlösbar durch die Schnittstelle mit der Werkzeugmaschine in Kontakt steht, liegen die jeweiligen elektrischen Kontakte der Werkzeugmaschine sowie des Akkumulators kraftschlüssig aneinander an. Derartige kraftschlüssige Verbindungen bestehen dabei gewöhnlich aus einer federnd gelagerten Klammer (d.h. weiblicher Kontakt) und einem in die Klammer einführbaren Einschubelement (d.h. männlicher Kontakt).

Die Vibrationen und Erschütterungen an der Werkzeugmaschine sowie an dem mit der Werkzeugmaschine verbundenen Akkumulator können zu einer Relativbewegung und sogar zu einer tatsächlichen Unterbrechung der Kontaktverbindung führen. Die Relativbewegung ist vermeiden, da durch diese es zu einer Abnutzung bzw. zu einem frühzeitigen Verschleiß der Kontakte kommen kann. Eine Unterbrechung der Kontaktverbindung kann zu einer unerwünschten Funkenbildung oder sogar zu einem Lichtbogen an den Kontakten führen.

Eine vibrations- bzw. erschütterungssichere Verbindung der jeweiligen elektrischen Kontakte Aufgabe der vorliegenden Erfindung ist es daher, eine Akku-Schnittstelle für einen Akkumulator, vorzugsweise als wiederlösbare Energieversorgung für eine Werkzeugmaschine, mit einer Anschlussvorrichtung, welche wenigstens ein erstes, zweites und drittes Anschlusselement bereitzustellen, mit der das vorstehend genannte Problem gelöst sowie eine vibrations- bzw. erschütterungssichere Verbindung erreicht werden kann.

Die Aufgabe wird gelöst durch den Gegenstand des unabhängigen Patentanspruchs 1. Vorteilhafte Ausführungsformen des erfindungsgemäßen Gegenstands sind in den abhängigen Patentansprüchen enthalten.

Die Aufgabe wird insbesondere gelöst durch einen Akkumulator, vorzugsweise als wiederlösbare Energieversorgung für eine Werkzeugmaschine, enthaltend wenigstens eine Energiespeicherzelle und eine Anschlussvorrichtung zum wiederlösbaren Verbinden des Akkumulators mit einer Werkzeugmaschine, wobei die Anschlussvorrichtung wenigstens ein erstes, zweites und drittes Anschlusselement enthält.

Erfindungsgemäß ist vorgesehen, dass die Anschlussvorrichtung eine Halte- und Aufnahmevorrichtung zum wenigstens teilweisen Aufnehmen des ersten, zweiten und dritten Anschlusselements enthält, wobei das erste und zweite Anschlusselement durch wenigstens ein Ausgleichelement so mit der Halte- und Aufnahmevorrichtung verbunden ist, dass eine Relativbewegung in wenigstens eine Richtung zwischen dem ersten und zweiten Anschlusselement sowie der Halte- und Aufnahmevorrichtung ausgleichbar ist und wobei das erste und zweite Anschlusselement so mit dem dritten Anschlusselement verbunden ist, dass eine Relativbewegung in wenigstens eine Richtung zwischen dem dritten Anschlusselement sowie der Halte- und Aufnahmevorrichtung ausgleichbar ist.

Hierdurch kann auf einfache Art und Weise an den Anschlusselementen wirkenden Vibrationen und Erschütterungen ausgeglichen werden, die zu einer Relativbewegung und sogar zu einer tatsächlichen Unterbrechung der Kontaktverbindung zwischen dem Akkumulator und der Werkzeugmaschine führen kann.

Entsprechend einer vorteilhaften Ausführungsform der vorliegenden Erfindung kann daher vorgesehen sein, dass die Halte- und Aufnahmevorrichtung wenigstens eine erste und zweite im Wesentlichen längliche Kammer enthält, in die jeweils das erste und zweite Anschlusselement mit einem dazugehörigen Ausgleichelement positionierbar ist, sodass das erste und zweite Anschlusselement mit Hilfe des dazugehörigen Ausgleichelements reversibel in einer Richtung relativ zu der jeweiligen Kammer bewegbar ist.

Eine Kammer kann dabei mehr als ein einziges Anschlusselement aufnehmen. So kann beispielsweise eine erste Kammer zwei oder mehr als zwei als Pluspole ausgestaltete Anschlusselemente enthalten. Dementsprechend kann auch eine zweite Kammer zwei oder mehr als zwei als Minuspole ausgestaltete Anschlusselemente sowie eine dritte Kammer zwei oder mehr als zwei als Kommunikationselement ausgestaltete Anschlusselemente enthalten. Gemäß alternativer Ausführungsformen kann es möglich sein, dass jede Kammer in Form eines Rahmens ohne durchgehende bzw. geschlossene Seitenwände ausgestaltet ist.

Das Ausgleichelement kann dabei in Form einer Feder und insbesondere einer Spiralfeder ausgestaltet sein. Alternativ kann das Ausgleichelement als ein Bauteil mit einem elastisch verformbaren Werkstoff ausgestaltet ist. Als Werkstoff ist dabei auch ein Elastomer möglich. Hierdurch kann auf einfache Art und Weise einer vibrationsbedingten Bewegung des Anschlusselements in mehreren Richtungen, d.h. nicht nur in der Richtung zu oder entgegen dem Anschlusselement, entgegengewirkt werden.

Gemäß einer weiteren vorteilhaften Ausführungsform der vorliegenden Erfindung kann vorgesehen sein, dass mindestens zwei Kammern in wenigstens einer Ebene zueinander versetzt an der Halte- und Aufnahmevorrichtung angeordnet sind.

Hierdurch kann ein mechanischer Widerstand verringert werden, der entstehen kann, wenn zu viele Anschlusselemente auf einer Ebene liegend gleichzeitig mit korrespondierenden Kontaktelementen einer Werkzeugmaschine oder eines Ladegeräts in eine Kontaktverbindung gebracht werden sollen. Durch die versetzte Anordnung kann zunächst eine erste Anzahl an Anschlusselementen des Akkumulators mit korrespondierenden Verbindungselementen einer Werkzeugmaschine oder eines Ladegeräts in eine Kontaktverbindung gebracht und anschließend eine zweite Anzahl an Anschlusselementen des Akkumulators mit korrespondierenden Verbindungselementen einer Werkzeugmaschine oder eines Ladegeräts in eine Kontaktverbindung gebracht werden.

Entsprechend einer vorteilhaften Ausführungsform der vorliegenden Erfindung kann daher vorgesehen sein, dass die Verbindungselemente der Werkzeugmaschine oder eines Ladegeräts in Form von stiftartigen Steckern und die Anschlusselemente der Akku-Schnittstelle in Form von Klemmen mit elastisch verformbaren Platten zur Aufnahme von stiftartigen Steckern ausgestaltet sind. Die stiftartigen Steckern können auch dabei auch als Schwerter bezeichnet werden.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine Seitenansicht einer erfindungsgemäßen Werkzeugmaschine mit einem an der Werkzeugmaschine angeschlossenen Akkumulator;
- Figur 2: eine weitere Seitenansicht der erfindungsgemäßen Werkzeugmaschine mit einem von der Werkzeugmaschine getrennten Akkumulator;
- Figur 3: eine perspektivische Detailansicht auf eine Schnittstellenvorrichtung der Werkzeugmaschine;
- Figur 4: eine Seitenansicht auf den Akkumulator mit einer Anschlussvorrichtung;
- Figur 5: eine Draufsicht auf die Anschlussvorrichtung des Akkumulators gemäß der ersten Ausführungsform;
- Figur 6: eine perspektivische Ansicht auf die Anschlussvorrichtung des Akkumulators gemäß der ersten Ausführungsform; und
- Figur 7: eine perspektivische Ansicht auf die Anschlussvorrichtung des Akkumulators gemäß einer zweiten Ausführungsform.

### Ausführungsbeispiele:

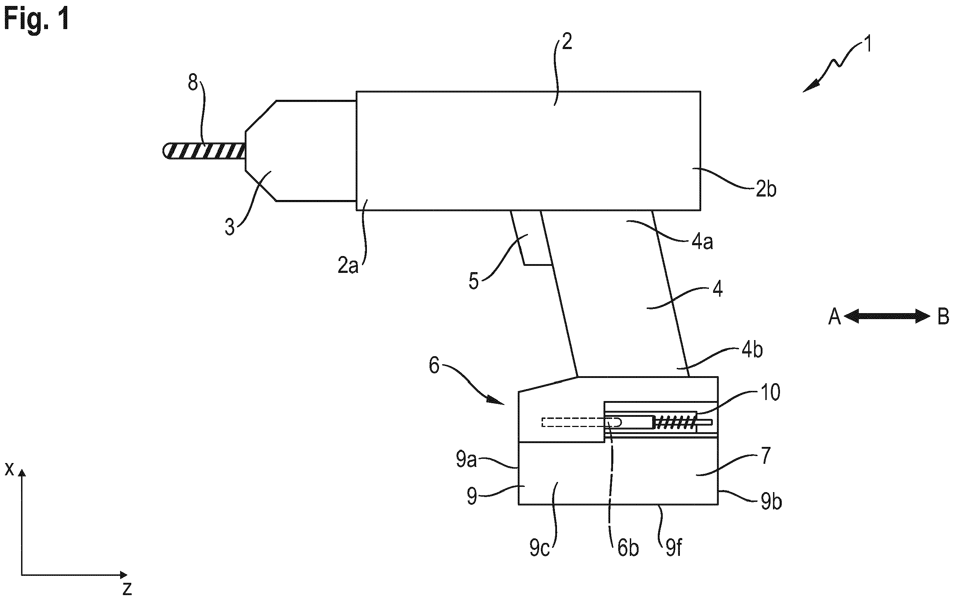

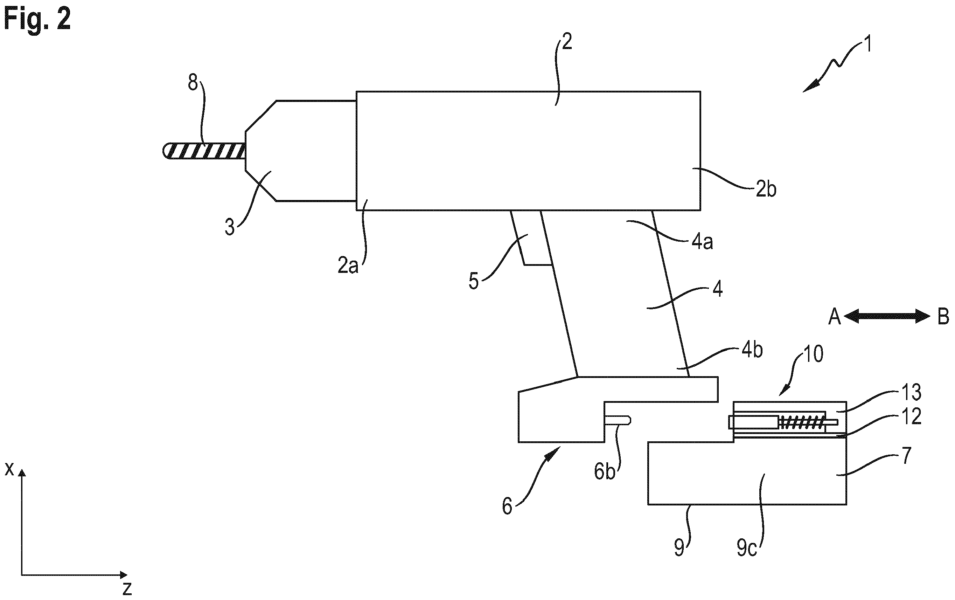

In den Figuren 1 und 2 ist eine beispielhafte Ausführungsform einer Werkzeugmaschine 1 dargestellt.

Die Werkzeugmaschine 1 ist dabei in Form einer Bohrmaschine ausgestaltet. Es ist jedoch auch möglich, dass es sich bei der Werkzeugmaschine 1 um einen Bohrhammer, eine Kreissäge, ein Schleifgerät oder dergleichen handelt.

Die in den Figuren 1 und 2 dargestellte Werkzeugmaschine 1 enthält im Wesentlichen ein Gehäuse 2, eine Werkzeugaufnahme 3, einen Handgriff 4 mit einem Aktivierungsschalter 5. Des Weiteren enthält die Werkzeugmaschine 1 eine Schnittstellenvorrichtung 6 für einen Akkumulator 7.

In Figur 1 ist ein Zustand dargestellt, bei dem der Akkumulator 7 mit der Werkzeugmaschine 1 verbunden ist. Der Akkumulator 7 wird hierzu in Pfeilrichtung A auf die Schnittstellenvorrichtung 6 geschoben. Wie in Figur 2 dargestellt, kann der Akkumulator 7 entsprechend der Pfeilrichtung B wieder von der Schnittstellenvorrichtung 6 und damit von der Werkzeugmaschine 1 entfernt werden. Wenn der Akkumulator 7 mit der Werkzeugmaschine 1 verbunden ist, kann elektrische Energie von dem Akkumulator 7 zu der Werkzeugmaschine 1 gelangen.

Das Gehäuse 2 der Werkzeugmaschine 1 weist ein erstes Ende 2a und ein zweites Ende 2b auf. An einem ersten Ende 2a des Gehäuses 2 ist die Werkzeugaufnahme 3 positioniert. Die Werkzeugaufnahme 3 dient zum Aufnahmen und wiederlösbaren Halten eines Werkzeugs 8. Das in den Figuren 1 und 2 gezeigte Werkzeug 8 ist in Form eines Bohrers ausgestaltet.

Im Inneren des Gehäuses 2 ist ein Elektromotor zum Erzeugen eines Drehmoments positioniert. Der Elektromotor ist damit ein elektrischer Verbraucher elektrischer Energie. Das in dem Elektromotor erzeugte Drehmoment wird über eine Abtriebswelle und ein Getriebe auf die Werkzeugaufnahme 3 übertragen. Mit Hilfe des übertragenen Drehmoments wird das Werkzeug 8 gedreht.

In den Figuren ist weder der Elektromotor, die Abtriebswelle noch das Getriebe im Inneren des Gehäuses 3 gezeigt.

Der Handgriff 4 enthält den Aktivierungsschalter 5, ein erstes Ende 4a sowie ein zweites Ende 4b. Der Aktivierungsschalter 5 dient zum Betätigen bzw. Aktivieren der Werkzeugmaschine 1 durch einen Anwender. Der Anwender ist in den Figuren nicht gezeigt.

An einem zweiten Ende 2b und unterhalb des Gehäuses 2 ist das erste Ende 4a des Handgriffs 4 befestigt.

An dem zweiten Ende 4b des Handgriffs 4 ist die Schnittstellenvorrichtung 6 für eine wiederlösbare Verbindung des Akkumulators 7 positioniert. Gemäß einer ersten Ausführungsform enthält die Schnittstellenvorrichtung 6 ein erstes, zweites und drittes Verbindungselement 6a, 6b, 6c.

Alternativ und entsprechend weiterer Ausführungsformen kann die Schnittstellenvorrichtung 6 auch mehr oder weniger als ein erstes, zweites und drittes Verbindungselement enthalten.

Gemäß der ersten Ausführungsform ist das erste Verbindungselement 6a als Pluspol, das zweite Verbindungselement 6b als Minuspol und das dritte Verbindungselement 6c als Kommunikationselement ausgestaltet. Durch die Ausgestaltung des ersten Verbindungselement 6a als Pluspol und des zweiten Verbindungselement 6b als Minuspol kann ein elektrischer Stromkreis zwischen der Werkzeugmaschine 1 und dem Akkumulator 7 zur Versorgung der Werkzeugmaschine 1 mit elektrischer Energie erzeugt bzw. geschlossen werden. Mit Hilfe des als Kommunikationselement ausgestalteten dritten Verbindungselements 6c können Informationen in Form von Daten und Signalen von der Werkzeugmaschine 1 empfangen und gesendet werden, sodass eine Kommunikation zwischen der Werkzeugmaschine 1 und dem Akkumulator 7 stattfinden kann.

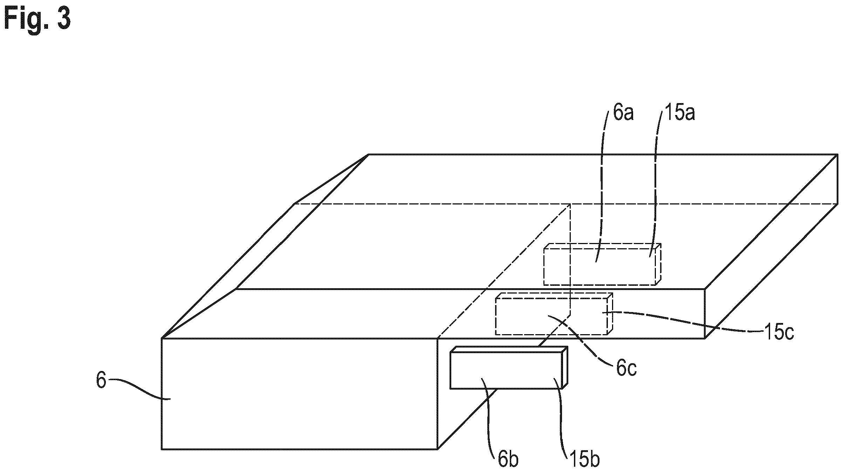

Wie in Figur 3 gezeigt ist das als Kommunikationselement ausgestaltete dritte Verbindungselement 6c dabei an der Schnittstellenvorrichtung 6 zwischen dem als Pluspol ausgestalteten ersten Verbindungselement 6a und dem als Minuspol ausgestalteten zweiten Verbindungselement 6b positioniert und damit im Wesentlichen in der Mitte der Schnittstellenvorrichtung 6 angeordnet. Alternativ sind aber auch andere Anordnungen der drei oder mehr Verbindungselemente möglich.

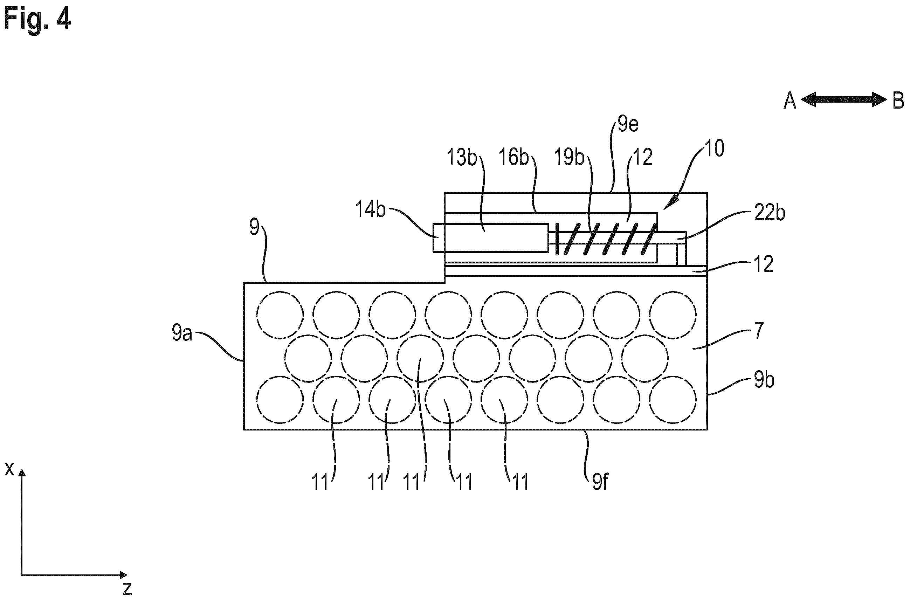

Wie insbesondere in Figur 4 gezeigt enthält der Akkumulator 7 im Wesentlichen ein Akku-Gehäuse 9. Das Akku-Gehäuse 9 enthält dabei wiederum eine Vorderseite 9a, eine Rückseite 9b, eine linke Seitenwand 9c, eine rechte Seitenwand, eine Oberseite 9e und eine Unterseite 9f. In den Figuren 1 und 2 ist lediglich die linke Seitenwand 9c des Akku-Gehäuses 9 gezeigt, wobei jedoch die linke und rechte Seitenwand im Wesentlichen identisch sind.

An der Oberseite 9e des Akku-Gehäuses 9 ist eine Anschlussvorrichtung 10 positioniert. Die Anschlussvorrichtung 10 kann auch als Akku-Schnittstellenvorrichtung bezeichnet werden.

Im Inneren des Akku-Gehäuses 9 ist eine Anzahl an einzelnen miteinander verbundenen Energiespeicherzellen 11, auch Akkuzellen genannt, positioniert. Darüber hinaus sind die jeweiligen Energiespeicherzellen 11 mit der Anschlussvorrichtung 10 verbunden. Mit Hilfe der Energiespeicherzellen 11 kann elektrische Energie in dem Akkumulator 7 aufgenommen, gespeichert und wieder abgegeben werden. Weder die Verbindung der Akkuzellen 11 untereinander noch die Verbindung der Akkuzellen 11 mit der Anschlussvorrichtung 10 sind in den Figuren nicht dargestellt.

Des Weiteren enthält der Akkumulator 7 eine Steuerungsvorrichtung 12, mit deren Hilfe die Funktionen des Akkumulators 7 steuert und geregelt werden. Zu den Funktionen des Akkumulators 7, die von der Steuerungsvorrichtung 12 gesteuert bzw. geregelt werden können, gehören beispielsweise die Regulierung der Menge von elektrischer Energie oder die Blockade der Abgabe von elektrischer Energie aus den Energiespeicherzellen 11. Die Steuerungsvorrichtung 12 des Akkumulators 7 ist mit den Energiespeicherzellen 11 verbunden. Die Verbindungen der Steuerungsvorrichtung 12 mit den einzelnen Energiespeicherzellen 11 sind in den Figuren nicht angezeigt.

Die Anschlussvorrichtung 10 enthält dabei im Wesentlichen eine Halte- und Aufnahmevorrichtung 13 zum Aufnehmen und Halten eines ersten, zweiten und dritten Anschlusselements 13a, 13b, 13c enthält. Das erste, zweite und dritte Anschlusselement 13a, 13b, 13c ist jeweils mit der Steuerungsvorrichtung 12 verbunden.

Entsprechend der ersten Ausführungsform ist das erste Anschlusselement 13a als Pluspol, das zweite Anschlusselement 13b als Minuspol und das dritte Anschlusselement 13c als Kommunikationselement ausgestaltet. Gemäß alternativer Ausführungsformen können mehr als drei Anschlusselemente vorgesehen sein, sodass beispielsweise ein erster und zweiter Pluspol, ein erster und zweiter Minuspol sowie ein erstes und zweites Kommunikationselement in der Halte- und Aufnahmevorrichtung 13 enthalten sind.

Wie in den Figuren 1 und 2 angedeutet, dient das erste als Pluspol ausgestaltete Anschlusselement 13a des Akkumulators 7 zum wiederlösbaren Verbinden mit dem entsprechenden als Pluspol ausgestalteten ersten Verbindungselement 6a der Werkzeugmaschine 1. Das zweite als Minuspol ausgestaltete Anschlusselement 13b des Akkumulators 7 dient wiederum zum wiederlösbaren Verbinden mit dem entsprechenden als Minuspol ausgestalteten zweiten Verbindungselement 6b der Werkzeugmaschine 1. Des Weiteren dient das dritte als Kommunikationselement ausgestaltete Anschlusselement 13c des Akkumulators 7 zum wiederlösbaren Verbinden mit dem entsprechenden als Kommunikationselement ausgestalteten dritten Verbindungselement 6c der Werkzeugmaschine 1.

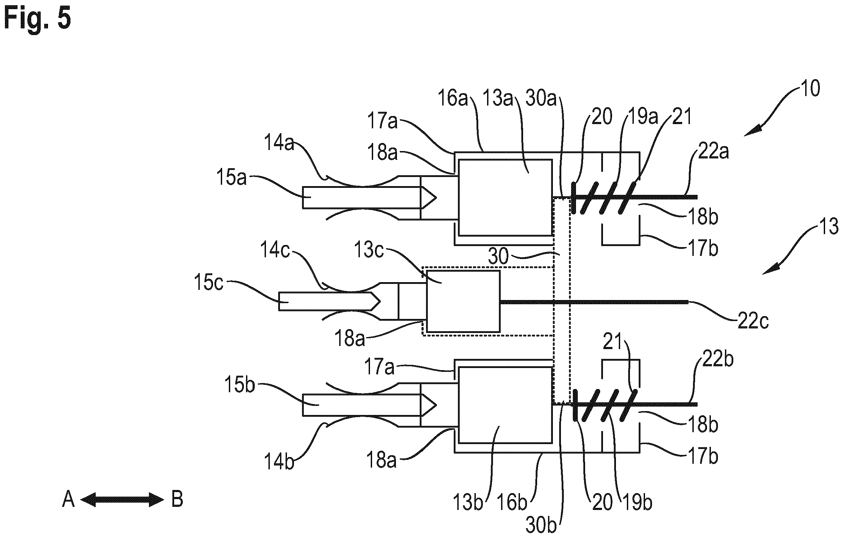

Wie insbesondere in Figur 5 gezeigt, enthält dabei das erste, zweite und dritte Anschlusselement 13a, 13b, 13c des Akkumulators 7 jeweils eine Klemme 14a, 14b, 14c. Die Klemme kann auch als Klammer bezeichnet werden.

Das erste, zweite und dritte Verbindungselement 6a, 6b, 6c der Werkzeugmaschine 1 enthält hingegen jeweils ein Schwert 15a, 15b, 15c als Kontakt. Das Schwert 15a, 15b, 15c kann auch als länglicher Kontaktstift ausgestaltet sein, sodass jedes Verbindungselement 6a, 6b, 6c der Werkzeugmaschine 1 in das entsprechende Anschlusselement 13a, 13b, 13c des Akkumulators 7 aufgenommen werden kann. Durch eine gewisse Federkraft der Anschlusselemente 13a, 13b, 13c wird das Verbindungselement 6a, 6b, 6c festgehalten bzw. in Kontakt gebracht.

Das Schwert kann dabei auch als stiftartiger Stecker bezeichnet werden.

Wie ebenfalls in Figur 5 ersichtlich enthält die Halte- und Aufnahmevorrichtung 13 eine erste und zweite Kammer 16a, 16b. Die erste Kammer 16a dient zum Aufnehmen des Anschlusselements 13a und die zweite Kammer 16b dient zum Aufnehmen des Anschlusselements 13b. Die Kammer 16a, 16b kann auch als Schacht bezeichnet werden.

Gemäß alternativer Ausführungsformen kann es möglich sein, dass die Kammer in Form eines Rahmens ohne durchgehende bzw. geschlossene Seitenwände ausgestaltet ist.

Jede Kammer 16a, 16b weist dabei ein erstes Ende 17a sowie ein zweites Ende 17b auf. An dem ersten Ende 17a einer jeden Kammer 16a, 16b ist eine erste Öffnung 18a und an dem zweiten Ende 17b einer jeden Kammer 16a, 16b ist eine zweite Öffnung 18b vorgesehen.

Die Öffnung kann auch als Aussparung bezeichnet werden.

In der ersten Kammer 16a ist das erste Anschlusselement 13a und in der zweiten Kammer 16b ist das zweite Anschlusselement 13b positioniert. Das dritte Anschlusselement 13c ist nicht in einer Kammer positioniert bzw. das Anschlusselement 13c ist zwischen den Kammern 16a, 16b positioniert.

Wie bereits vorstehend erwähnt, kann es entsprechend einer alternativen Ausführungsform möglich sein, dass eine Kammer mehr als ein Anschlusselement aufnimmt. So kann beispielsweise die erste Kammer 16a zwei oder mehr als zwei als Pluspole ausgestaltete Anschlusselemente enthalten. Dementsprechend kann die zweite Kammer 16b zwei oder mehr als zwei als Minuspole ausgestaltete Anschlusselemente enthalten.

Wie bereits vorstehend andeutet ist jede Kammer 16a, 16b im Wesentlichen länglich ausgestaltet und dabei um eine gewisse Wegstrecke länger dimensioniert als das entsprechende in der jeweiligen Kammer 16a, 16b positionierte Anschlusselement 13a, 13b. Die Kammer 16a, 16b ist länger ausgestaltet, damit das Anschlusselement 13a, 13b sich in Pfeilrichtung A oder B in der Kammer 16a, 16b bewegen kann. Durch die erste Öffnung 18a an dem ersten Ende 17a einer jeden Kammer 16a, 16b ragt die jeweilige Klemme 14a, 14b eines Anschlusselements 13a, 13b so aus der jeweiligen Kammer 16a, 16b heraus, dass die beiden Schenkel einer jeden Klemme 14a, 14b außerhalb der Kammer 16a, 16b zum Aufnehmen eines Schwertes 15a, 15b eines Verbindungselements 6a, 6b der Werkzeugmaschine frei beweglich sind, vgl. Figur 5.

Des Weiteren enthält das erste und zweite Anschlusselement 13a, 13b jeweils ein Ausgleichelement 19a, 19b.

In dem vorliegenden Ausführungsbeispiel ist das Ausgleichelement 19a, 19b in Form einer Spiralfeder und insbesondere als Druckfeder ausgestaltet.

Alternativ kann es sich bei dem Ausgleichelement 19a, 19b auch um einen elastischen Block handeln.

Jedes als Feder ausgestaltetes Ausgleichelement 19a, 19b weist dabei ein erstes und zweites Ende 20, 21 auf. Wie insbesondere in Figur 5 gezeigt, ist das erste Ende 20 eines als Feder ausgestalteten Ausgleichelements 19a, 19b mit dem jeweiligen hinteren Ende eines Anschlusselements 13a, 13b verbunden. Das zweite Ende 21 eines als Feder ausgestalteten Ausgleichelements 19a, 19b ist mit dem jeweiligen zweiten Ende 17b einer Kammer 16a, 16b verbunden. Durch die spezielle Ausgestaltung des Ausgleichelement 19a, 19b als Druckfeder sowie durch die Positionierung zwischen dem zweiten Ende 17b einer Kammer 16a, 16b und dem hinteren Ende eines Anschlusselements 13a, 13b wird das Anschlusselement 13a, 13b in eine Pfeilrichtung A gedrückt.

Darüber hinaus kann das Anschlusselement 13a, 13b gegen die Federkraft des Ausgleichelements in eine Pfeilrichtung B bewegt werden. Eine Bewegung des Anschlusselements 13a, 13b in Pfeilrichtung A oder B innerhalb der Kammer 16a, 16b kann durch Vibrationen oder Erschütterungen geschehen, die auf den Akkumulator wirken während der Verwendung der Werkzeugmaschine.

Wie ebenfalls in Figur 5 ersichtlich enthält die Halte- und Aufnahmevorrichtung 13 ein Verbindungselement 30 mit einem ersten Ende 30a und einem zweiten Ende 30b. Darüber hinaus weist die erste Kammer 16a einen ersten Durchbruch 31a und die zweite Kammer 16b einen zweiten seitlichen Durchbruch 31b auf. Der seitliche Durchbruch kann auch als Öffnung oder Aussparung bezeichnet werden.

Das Verbindungselement 30 dient zum Verbinden der drei Anschlusselemente 13a, 13b, 13c untereinander, wobei das erste Anschlusselement 13a durch das Verbindungselement 30 mit dem dritten Anschlusselement 13c und das dritte Anschlusselement 13c durch das Verbindungselement 30 mit dem zweiten Anschlusselement 13b verbunden ist. Das Verbindungselement 30 erstreckst sich dabei mit dem ersten Ende 30a durch den ersten seitlichen Durchbruch 31a der ersten Kammer 16a und mit dem zweiten Ende durch den zweiten seitlichen Durchbruch 31b der jeweiligen Kammer 16b. Das erste Ende 30a des Verbindungselements 30 ist mit dem ersten Anschlusselement 13a und das zweite Ende 30b des Verbindungselements 30 ist mit dem zweiten Anschlusselement 13b verbunden. Die Mitte 30c des Verbindungselements 30 ist wiederum mit dem dritten Anschlusselement 13c verbunden.

Durch die starre Verbindung der drei Anschlusselemente 13a, 13b, 13c durch das Verbindungselement 30 bewegen sich die drei Anschlusselemente 13a, 13b, 13c synchron bzw. simultan zueinander.

Das erste, zweite und dritte Anschlusselement 13a, 13b, 13c enthält jeweils eine Verbindungsleitung 22a, 22b, 22c. Die Verbindungsleitung 22a, 22b, 22c dient zum Verbinden der Anschlusselemente 13a, 13b, 13c mit der Steuerungsvorrichtung 12 des Akkumulators 7. Bei dem ersten und zweiten Anschlusselement 13a, 13b ist die jeweilige Verbindungsleitung 22a, 22b ausgestaltet, um einen elektrischen Strom zu leiten.

Die Verbindungsleitung 22a, 22b des ersten und zweiten Anschlusselements 13a, 13b kann auch als Litze bezeichnet werden.

Bei dem dritten Anschlusselement 13c ist die Verbindungsleitung 22c ausgestaltet, um Daten und Informationen in Form von elektrischen Signalen zu leiten.

Wie in den Figuren angedeutet verläuft die jeweilige Verbindungsleitung durch das als Druckfeder ausgestaltete Ausgleichelement.

Mit Hilfe des als Druckfeder ausgestalteten Ausgleichelements 19a, 19b werden in einem verbundenen Zustand, d.h. wenn die Anschlusselements 13a, 13b, 13c des Akkumulators 7 und die Verbindungselemente 6a, 6b, 6c der Werkzeugmaschine 1 in Kontakt stehen, die Anschlusselemente 13a, 13b, 13c in Richtung A bzw. in Richtung der Verbindungselemente 6a, 6b, 6c gedrückt.

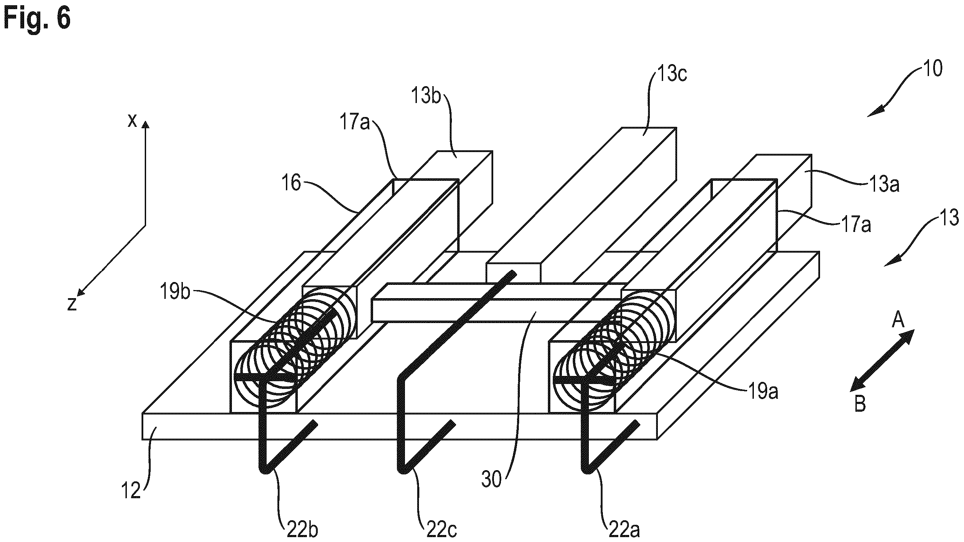

In Figur 6 ist die Halte- und Aufnahmevorrichtung 13 gemäß der ersten Ausführungsform gezeigt. Die erste und zweite Kammer 16a, 16b sowie das erste, zweite und dritte Anschlusselement 13a, 13b, 13c sind in einer Ebene positioniert. Das dritte Anschlusselement 13c ist jedoch in Pfeilrichtung A zu dem ersten und zweiten Anschlusselement 13a, 13b sowie der ersten und zweiten Kammer 16a, 16b versetzt angeordnet.

Durch die spezielle versetzte Anordnung der Anschlusselemente 13a, 13b, 13c untereinander wird zunächst das dritte Anschlusselement 13c mit dem korrespondierenden Verbindungselement 6c der Werkzeugmaschine 1 verbunden. Anschließend wird das erste und zweite Anschlusselemente 13a, 13b mit dem korrespondierenden ersten und zweiten Verbindungselement 6a, 6b der Werkzeugmaschine 1 verbunden. Dadurch, dass nicht gleichzeitig alle drei Anschlusselement 13a, 13b, 13c mit den korrespondierenden Verbindungselement 6a, 6b, 6c verbunden werden, ist der mechanische Widerstand beim Verbinden des Akkumulators 7 mit der Werkzeugmaschine 1 geringer.

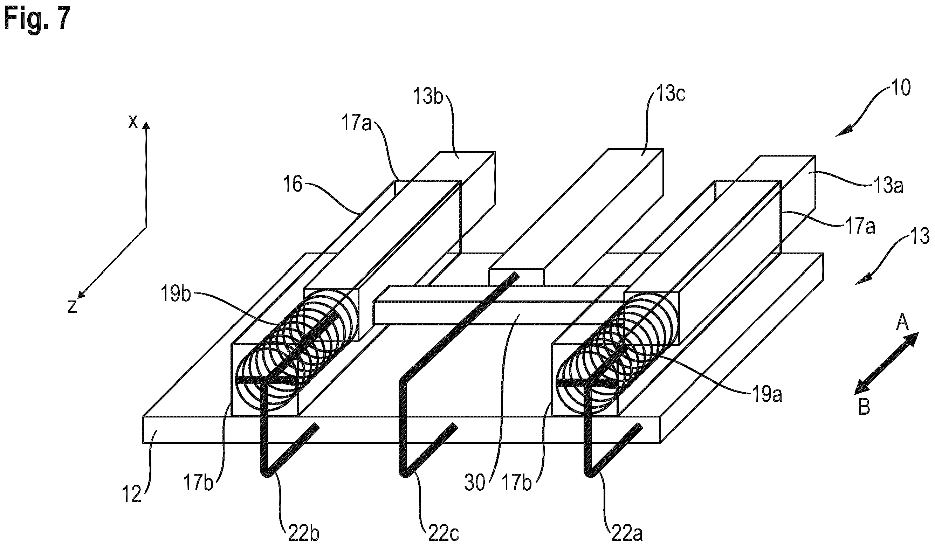

In Figur 7 ist die Halte- und Aufnahmevorrichtung 13 gemäß einer zweiten Ausführungsform gezeigt. Die erste und zweite Kammer 16a, 16b sowie das erste, zweite und dritte Anschlusselement 13a, 13b, 13c sind ebenfalls wie in der ersten Ausführungsform in einer Ebene positioniert. Darüber hinaus sind die erste und zweite Kammer 16a, 16b, 16c sowie das erste, zweite und dritte Anschlusselement 13a, 13b, 13c nicht versetzt und im Wesentlichen in einer Linie angeordnet.

### Bezuaszeichen

- 1: Werkzeugmaschine
- 2: Gehäuse der Werkzeugmaschine
- 2a: erstes Ende des Gehäuses der Werkzeugmaschine
- 2b: zweites Ende des Gehäuses der Werkzeugmaschine
- 3: Werkzeugaufnahme
- 4: Handgriff
- 4a: erstes Ende des Handgriffs
- 4b: zweites Ende des Handgriffs
- 5: Aktivierungsschalter
- 6: Schnittstellenvorrichtung
- 6a: erstes Verbindungselement der Schnittstellenvorrichtung
- 6b: zweites Verbindungselement der Schnittstellenvorrichtung
- 6c: drittes Verbindungselement der Schnittstellenvorrichtung
- 7: Akkumulator
- 8: Werkzeug
- 9: Akku-Gehäuse
- 9a: eine Vorderseite des Akku-Gehäuses
- 9b: eine Rückseite des Akku-Gehäuses
- 9c: eine linke Seitenwand des Akku-Gehäuses
- 9e: eine Oberseite des Akku-Gehäuses
- 9f: eine Unterseite des Akku-Gehäuses
- 10: Anschlussvorrichtung
- 11: Energiespeicherzelle
- 12: Steuerungsvorrichtung
- 13: Halte- und Aufnahmevorrichtung
- 13a: erstes Anschlusselement
- 13b: zweites Anschlusselement
- 13c: drittes Anschlusselement
- 14a: erste Klemme
- 14b: zweite Klemme
- 14c: dritte Klemme
- 15a: erstes Schwert
- 15b: zweites Schwert
- 15c: drittes Schwert
- 16a: erste Kammer
- 16b: zweite Kammer
- 17a: erstes Ende einer Kammer
- 17b: zweites Ende einer Kammer
- 18a: erste Öffnung einer Kammer
- 18b: zweite Öffnung einer Kammer
- 19a: erstes Ausgleichelement
- 19b: zweites Ausgleichelement
- 20: erstes Ende eines Ausgleichelements
- 21: zweites Ende eines Ausgleichelements
- 22a: erste Verbindungsleitung
- 22b: zweite Verbindungsleitung
- 22c: dritte Verbindungsleitung
- 30: Verbindungselement
- 30a: erstes Ende des Verbindungselements
- 30b: zweites Ende des Verbindungselements
- 30c: Mitte des Verbindungselements
- 31a: erster seitlicher Durchbruch
- 31b: zweiter seitlicher Durchbruch

## Patentansprüche

1. Akkumulator (7), vorzugsweise als wiederlösbare Energieversorgung für eine Werkzeugmaschine (1), enthaltend wenigstens eine Energiespeicherzelle (11) und eine Anschlussvorrichtung (10) zum wiederlösbaren Verbinden des Akkumulators (7) mit einer Werkzeugmaschine (1), wobei die Anschlussvorrichtung (10) wenigstens ein erstes, zweites und drittes Anschlusselement (13a, 13b, 13c) enthält,
**dadurch gekennzeichnet, dass** die Anschlussvorrichtung (10) eine Halte- und Aufnahmevorrichtung (13) zum wenigstens teilweisen Aufnehmen des ersten, zweiten und dritten Anschlusselements (13a, 13b, 13c) enthält, wobei das erste und zweite Anschlusselement (13a, 13b) durch wenigstens ein Ausgleichelement (19a, 19b) so mit der Halte- und Aufnahmevorrichtung (13) verbunden ist, dass eine Relativbewegung in wenigstens eine Richtung (A, B) zwischen dem ersten und zweiten Anschlusselement (13a, 13b) sowie der Halte- und Aufnahmevorrichtung (13) ausgleichbar ist und wobei das erste und zweite Anschlusselement (13a, 13b) so mit dem dritten Anschlusselement (13c) verbunden ist, dass eine Relativbewegung in wenigstens eine Richtung (A, B) zwischen dem dritten Anschlusselement (13c) sowie der Halte- und Aufnahmevorrichtung (13) ausgleichbar ist.

2. Akkumulator (7) nach Anspruch 1,
**dadurch gekennzeichnet, dass** die Halte- und Aufnahmevorrichtung (13) wenigstens eine erste und zweite im Wesentlichen längliche Kammer (16a, 16b) enthält, in die jeweils das erste und zweite Anschlusselement (13a, 13b) mit einem dazugehörigen Ausgleichelement (19a, 19b) positionierbar ist, sodass das erste und zweite Anschlusselement (16a, 16b) mit Hilfe des dazugehörigen Ausgleichelements (19a, 19b) reversibel in einer Richtung (A, B) relativ zu der jeweiligen Kammer (19a, 19b) bewegbar ist.

3. Akkumulator (7) nach Anspruch 1 oder 2,
**dadurch gekennzeichnet, dass** mindestens zwei Kammern (19a, 19b) in wenigstens einer Ebene zueinander versetzt an der Halte- und Aufnahmevorrichtung (13) angeordnet sind.
